# EUROPEAN PATENT APPLICATION

(11) **EP 4 810 234 A1**
(43) Date of publication of application: **23.09.2026**
(21) Application number: 26185920.1
(22) Date of filing: 18.11.2024
(51) Int. Cl.: B29C 65/02, H01M 50/105, H01M 50/184, H01M 50/186, H01M 50/534, B29C 65/18, B29K 705/02, B29L 31/00, B29L 31/34

(54) **SEALING BLOCK, SEALING APPARATUS AND SECONDARY BATTERY**

(30) Priority: 29.11.2023 KR 20230169882; 20.08.2024 KR 20240111492
(62) Document number(s) of the earlier application(s) in accordance with Art. 76 EPC: 24213582.0 / 4 564 542
(71) Applicant: LG Energy Solution, Ltd., Seoul 07335 (KR)
(72) Inventor: LEE, Hyun Sang, 34122 DAEJEON (KR); KIM, Jung Doo, 34122 DAEJEON (KR)
(74) Representative: Plasseraud IP

(57) **Abstract**

A sealing block configured to seal a lead film covering a lead metal and a pouch covering the lead film. The sealing block includes a first sealing surface extending in a length direction and is configured to apply pressure in a height direction perpendicular to the length direction. The first sealing surface includes a center sealing surface extending in the length direction; and a side sealing surface located at each end of the center sealing surface in the length direction. The side sealing surface is stepped in the height direction with respect to the center sealing surface, and the side sealing surface has a sealing protrusion that protrudes in the height direction to a predetermined distance from the side sealing surface.

## Description

### TECHNICAL FIELD

### Technical Field

The present disclosure relates to a sealing block, a sealing apparatus and a secondary battery manufactured by the same, and more particularly, to a sealing block and a sealing apparatus for sealing an outer packaging material or a pouch and a pouch-type secondary battery manufactured by the same.

### BACKGROUND ART

Secondary batteries remarkably reduce the use of fossil fuels, and in addition to the primary advantage, they do not generate by-products from the use of energy. From this perspective, secondary batteries are attracting attention as a new source of energy that is more environmentally friendly and energy-efficient.

In a process of manufacturing a pouch-type secondary battery, a lead film covering a lead metal is thermally joined to a packaging material or a pouch by a heating block or a heating jig that is a medium which provides heat and pressure. An inner adhesive layer (for example, a polypropylene layer) of the pouch present in a thin film form has an increased degree of freedom of flow as it melts when heat is applied, and attaches through curing by a proper cooling process.

In this instance, the adhesive layer that becomes flowable by the applied heat and pressure generally reduces in thickness compared to before adhesion, and squeezes out in two side directions by the applied pressure and the flowable nature. Due to the squeeze-out (leakage), the thermally joined adhesive layer may have a V-shaped dent and pointed edges or may be formed in an irregular undulating shape, which affects durability and quality of the pouch-type secondary battery.

The above-described background is possessed or acquired by the inventors in the process of deriving this disclosure, and cannot be technology published and available to the public before the filing date.

Examples of background art can be found in EP3340334B1, and EP4056352A1.

### SUMMARY

### Technical Problem

The present disclosure is designed to solve the above-described problem, and therefore the present disclosure is directed to providing a sealing block and a sealing apparatus for reducing the volume of void between a lead film and a pouch.

The present disclosure is further directed to providing a sealing block and a sealing apparatus for preventing a lead film covering a lead metal from flowing in an inward-outward direction of a pouch during sealing.

The present disclosure is further directed to providing a secondary battery having high quality manufactured by the sealing apparatus.

### Technical Solution

A sealing block according to the independent claim 1 is provided. The sealing block is configured to seal a lead film covering a lead metal and a pouch covering the lead film. The sealing block includes a first sealing surface extending in a length direction and is configured to apply pressure in a height direction perpendicular to the length direction. The first sealing surface includes a center sealing surface extending in the length direction; and a side sealing surface located at each end of the center sealing surface in the length direction. The side sealing surface is stepped in the height direction with respect to the center sealing surface. The side sealing surface has a sealing protrusion that protrudes in the height direction to a predetermined distance from the side healing surface.

The side sealing surface may be extended from an end portion of the center sealing surface, and be stepped from the center sealing surface in the direction of pressure applied.

The sealing block may further include a second sealing surface stepped in the height direction with respect to the first sealing surface. This feature is provided to seal two end portions of the lead film and the pouch.

The center sealing surface, the side sealing surface and the second sealing surface may be stepped in a sequential order in the height direction. The height direction corresponds to the direction of pressure applied by the sealing block.

The side sealing surface may overlap an end area of the lead metal in the width direction, where the width direction is perpendicular to the length direction and perpendicular to the height direction.

An inclined portion extending at an angle between an end portion of the side sealing surface and an end portion of the second sealing surface may be present between the side sealing surface and the second sealing surface.

The sealing protrusion may extend along the length direction perpendicular to the width direction of the side sealing surface.

The sealing protrusion may include a plurality of sealing protrusions arranged at a predetermined interval in the width direction of the side sealing surface. The width direction is perpendicular to the length direction and perpendicular to the height direction.

The sealing protrusion may be formed at edges of the side sealing surface in the width direction.

The sealing protrusions may include a first sealing protrusion formed at an edge of the side sealing surface in the width direction, and a second sealing protrusion formed at an opposite edge of the side sealing surface in the width direction.

The sealing protrusion may extend to the second sealing surface over the entire length of the side sealing surface.

The sealing block may include a pair of sealing blocks arranged facing each other in the direction of pressure applied. The direction of pressure applied correspond to the height direction.

A sealing apparatus may be provided comprising the sealing block as described above.

A secondary battery according to the independent claim 12 includes a pouch including an accommodation portion accommodating an electrode assembly, and a sealing portion disposed around the accommodation portion; a lead metal connected to the electrode assembly and protruded outward over the sealing portion; and a lead film covering the lead metal and sealed with the sealing portion. The sealing portion includes a first area where the pouch and the lead film are sealed, the first area overlapping the lead metal. The first area includes a center area; and a side area located at two sides of the center area and stepped with the center area. The side area has a pressed portion extending in a length direction of the side area. The length direction of the side area is perpendicular to the height direction.

The pressed portion may include a pair of pressed portions extended parallel to each other and arranged at a predetermined interval in a width direction of the side area. The width direction is perpendicular to the length direction and perpendicular to the height direction.

The pressed portion may be formed at two edges of the side area in a width direction.

The sealing portion may further include a second area where two end portions of the lead film and the pouch are sealed, the second area being stepped with the first area in the height direction.

In a thickness direction of the sealing portion, the center area, the side area and the second area may be stepped in a sequential order in the height direction.

The sealing portion may further include an inclined area formed between the side area and the second area, and extending at an angle between an end portion of the side sealing surface and an end portion of the second sealing surface.

The pressed portion may extend to the second area over the side area.

The center area, the side area and the pressed portion may be located at two surfaces of the sealing portion.

### Advantageous Effects

According to an exemplary embodiment of the present disclosure, it may be possible to reduce the size of void between the lead film and the pouch. Accordingly, it may be possible to improve durability and quality of the pouch-type secondary battery.

Additionally, it may be possible to prevent the lead film covering the lead metal from flowing in an inward-outward direction of the pouch during sealing. Accordingly, it may be possible to improve durability and quality of the pouch-type secondary battery.

Besides, the effects of the present disclosure may include effects that can be easily predicted by those skilled in the art from the embodiments of the present disclosure.

### BRIEF DESCRIPTION OF THE DRAWINGS

FIG. 1 is a perspective view of a pouch-type secondary battery.
FIG. 2 is a perspective view of a sealing block of a sealing apparatus according to Comparative Example of the present disclosure.
FIG. 3 is an enlarged view of section B in FIG. 2.
FIG. 4 is a cross-sectional view of FIG. 1, taken along the line I-I', showing a secondary battery manufactured by a sealing apparatus according to Comparative Example of the present disclosure.
FIG. 5 is an enlarged plan view of a sealing portion of a pouch formed by a sealing apparatus according to Comparative Example of the present disclosure and a lead film adjacent thereto.
FIG. 6 is a cross-sectional view of FIG. 5, taken along the line II-II'.
FIG. 7 is a diagram showing a lead film protruding in a width direction of a sealing surface during sealing.
FIG. 8 is a perspective view of a sealing block of a sealing apparatus according to Embodiment 1 of the present disclosure.
FIG. 9 is an enlarged view of section C in FIG. 8.
FIG. 10 is a cross-sectional view of FIG. 1, taken along the line I-I', showing a secondary battery manufactured by a sealing apparatus according to Embodiment 1 of the present disclosure.
FIG. 11 is an enlarged plan view of a sealing portion of a pouch formed by a sealing apparatus according to Embodiment 1 of the present disclosure and a lead film adjacent thereto.
FIG. 12 is a cross-sectional view of FIG. 11, taken along the line III-III'.
FIG. 13 is an enlarged plan view of a sealing portion of a pouch formed by a sealing apparatus according to Embodiment 2 of the present disclosure and a lead film adjacent thereto.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. The following description is one of aspects of the embodiments, and in describing an embodiment, a detailed description of known function or element is omitted to make the subject matter of the present disclosure clear.

In affixing the reference numerals to the elements in each drawing, the identical or similar reference numerals are affixed to the identical or similar elements throughout the specification. An element included in an embodiment and an element including a common function will be described using the same name in other embodiment. The terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation. The description of the drawings is made with reference to orthogonal system of axes X, Y, Z. The features of the described embodiments are explained with reference to length direction X parallel to X-axis, width direction Y parallel to Y-axis and height direction Z parallel to Z-axis.

Additionally, the present disclosure is not limited to the above-described embodiments, and a variety of modifications and changes may be made by persons having ordinary skill in the technical field pertaining to the present disclosure from this disclosure. Therefore, it should be noted that the aspect of the present disclosure is not limited to the above-described embodiments, and the appended claims and all the equivalents or variations thereto fall within the scope of the present disclosure.

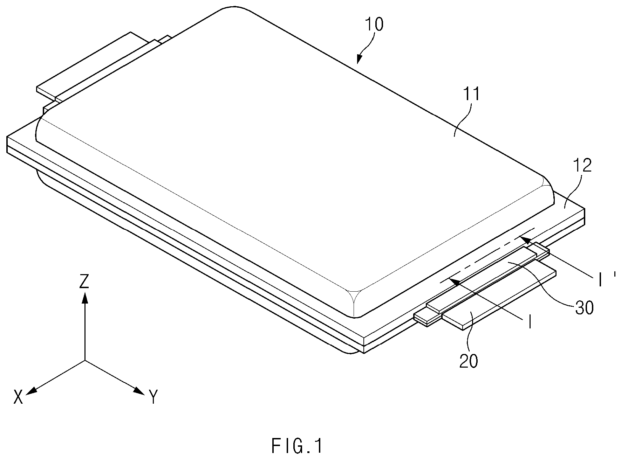

FIG. 1 is a perspective view of a pouch-type secondary battery.

The pouch-type secondary battery includes an outer packaging material or a pouch 10. More specifically, the pouch 10 includes an accommodation portion 11 accommodating an electrode assembly, and a sealing portion 12 disposed around the accommodation portion 11. The electrode assembly may include an electrode and a separator arranged in an alternating manner, and its structure and operation are well known in the art and its description is omitted.

The pouch 10 may be manufactured by forming a laminate sheet, and the laminate sheet may include a first resin layer that forms an inner layer of the pouch 10, a second resin layer that forms an outer layer of the pouch 10, and a metal layer interposed between the first resin layer and the second resin layer. For example, the first resin layer may be made of polypropylene (PP), the second resin layer may be made of polyethylene terephthalate (PET), and the metal layer may be made of aluminum (AL).

The accommodation portion 11 may be formed by forming the laminate sheet to be recessed in a cup shape. The sealing portion 12 may be formed by sealing the sides of the pouch 10 along the periphery of the accommodation portion 11 in which the electrode assembly is received.

The pouch-type secondary battery may include a lead metal 20 connected to the electrode assembly and protruded outward over the sealing portion 12, and a lead film 30 covering the lead metal 20 and sealed with the sealing portion 12.

The lead metal 20 may be connected to the electrode of the electrode assembly and play a role as a passage of an electric current. The lead metal 20 may include a pair of lead metals connected to the positive electrode and the negative electrode. The pair of lead metals 20 may protrude from the sealing portion 12 in the opposite directions as shown in FIG. 1. However, the present disclosure is not limited thereto, and the pair of lead metals may protrude parallel to each other in the same direction.

The lead film 30 may cover a part of the lead metal 20. The lead film 30 may insulate the lead metal 20 from the pouch 10. The lead film 30 may include an insulating material. The lead film 30 may be sealed with the inner layer of the pouch 10 when forming the sealing portion 12.

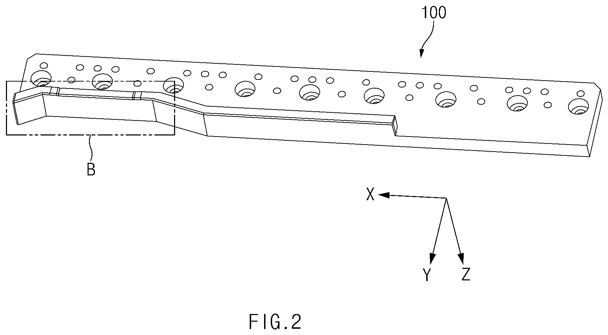

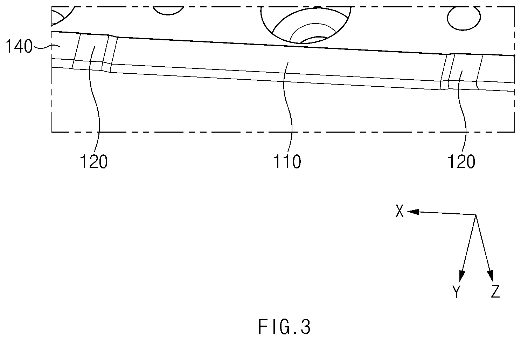

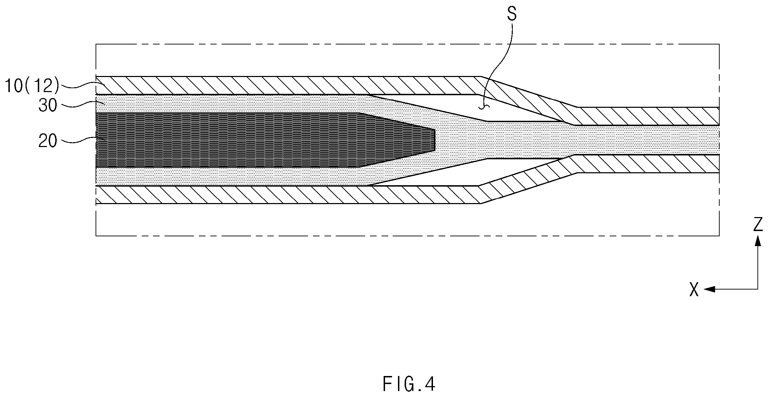

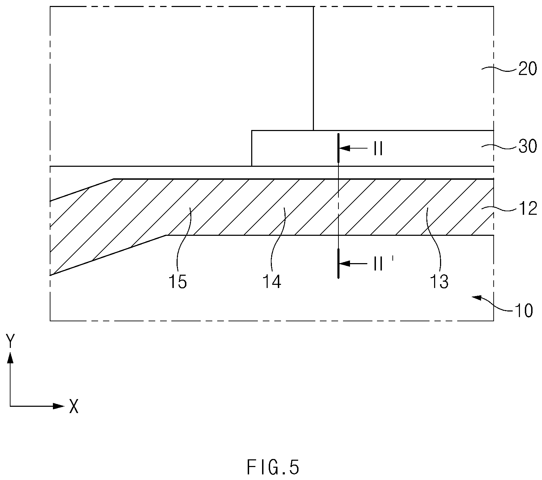

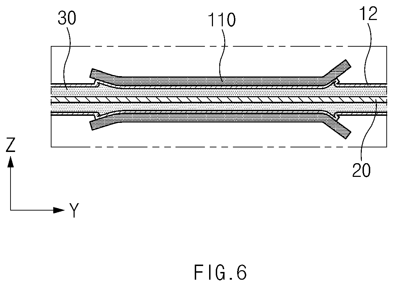

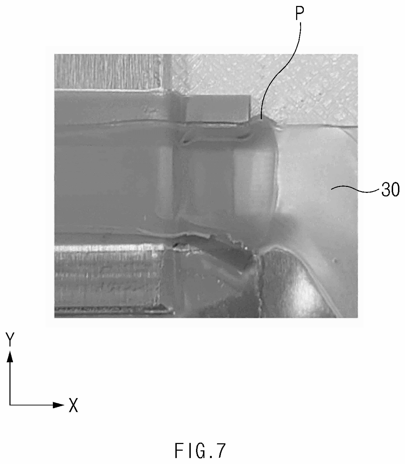

FIG. 2 is a perspective view of a sealing block of a sealing apparatus according to Comparative Example of the present disclosure, FIG. 3 is an enlarged view of section B in FIG. 2, FIG. 4 is a cross-sectional view of FIG. 1, taken along the line I-I', showing a secondary battery manufactured by the sealing apparatus according to Comparative Example of the present disclosure, FIG. 5 is an enlarged plan view of the sealing portion of the pouch formed by the sealing apparatus according to Comparative Example of the present disclosure and the lead film adjacent thereto, FIG. 6 is a cross-sectional view of FIG. 5, taken along the line II-II', and FIG. 7 is a diagram showing the lead film protruding in a width direction Y of a sealing surface during sealing.

The sealing block 100 of the sealing apparatus according to Comparative Example of the present disclosure may be configured to seal the lead film 30 and the pouch 10. The sealing block 100 may thermally join the lead film 30 and the pouch 10 covering the lead film 30 by applying pressure and heat to the lead film 30 and the pouch 10. The sealing block 100 may include a pair of sealing blocks on two sides of the lead film 30 and the pouch 10.

The sealing block 100 may include a plurality of sealing surfaces 110, 120, 140. The sealing surfaces 110, 120, 140 may be configured to apply pressure and heat to the pouch 10 covering the lead film 30 while in contact with the pouch 10. The sealing surfaces 110, 120, 140 may include the first sealing surface 110, the second sealing surface 120 and the third sealing surface 140.

The first sealing surface 110 may be configured to seal the central portion of the lead film 30 that overlaps the lead metal 20. More specifically, the first sealing surface 110 may seal the central portion of the lead film 30 and the inner layer of the pouch 10.

The second sealing surface 120 may be configured to seal the edge portion of the lead film 30. More specifically, the second sealing surface 120 may seal the edge portion of the lead film 30 that does not overlap the lead metal 20 and the inner layer of the pouch 10. The second sealing surface 120 may be disposed outside of two end portions of the first sealing surface 110 and be stepped from the first sealing surface 110 in a direction in which the sealing block 100 applies pressure.

The third sealing surface 140 may be disposed outside of the second sealing surface 120. The third sealing surface 140 may seal each inner layer of the pouch 10 by applying pressure and heat to the pouch 10.

A void S may be created in the pouch 10. Specifically, the void S may be created between the pouch 10 and the lead film 30. The void S may be created at a corresponding location to the connected part of the first sealing surface 110 and the second sealing surface 120.

When the lead film 30 melts and adequately flows in the length direction X of the sealing surfaces 110, 120 during sealing, the void S may be filled with the molten lead film30, resulting in the reduced volume of the void S. The length direction X of the sealing surfaces 110, 120 may be parallel to the width direction Y of the lead metal 20. Additionally, the length direction X of the sealing surfaces 110, 120 may be parallel to the length direction X of the lead film 30.

However, in the case of the sealing block 100 according to Comparative Example, the first sealing surface 110 has a flat plate shape with no curve or bend, failing to allow the lead film 30 to adequately flow in the length direction X. In this case, the volume of the void S is large and the corresponding part has a gap between the pouch 10 and the lead film 30, resulting in quality degradation of the secondary battery.

Referring to FIG. 7, leakage of the lead film 30 occurs while the sealing block 100 seals the pouch 10 and the lead film 30 as shown. The two sides of the lead film 30 in the thickness direction may be subjected to pressure by the sealing block 100, and the lead film 30 may protrude (P) in the width direction Y by the pressure applied from the two directions.

When the lead film 30 protrudes in the width direction Y, the surface of the pouch 10 covering the lead film 30 may be deformed or wrinkled, and further, a gap may be created between the pouch 10 and the lead film 30.

A sealing apparatus according to the embodiments of the present disclosure for solving this problem and a secondary battery sealed by the same will be described with reference to the accompanying drawings.

### Embodiment 1

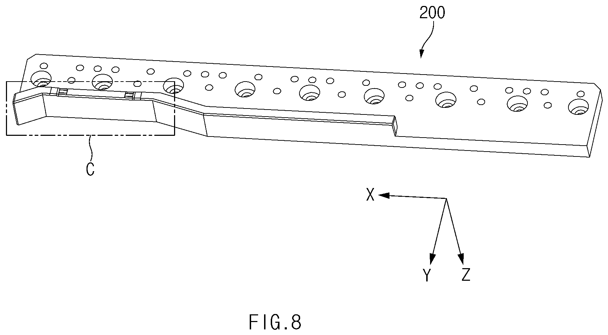

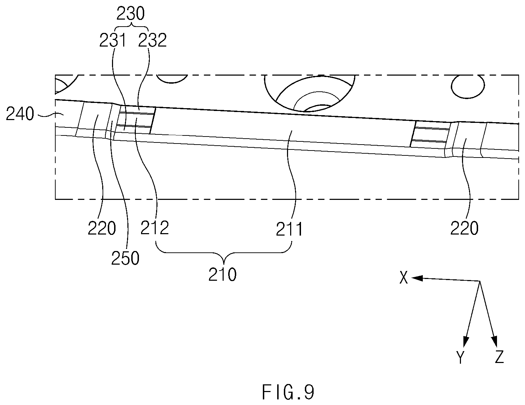

FIG. 8 is a perspective view of a sealing block of a sealing apparatus according to Embodiment 1 of the present disclosure, and FIG. 9 is an enlarged view of section C in FIG. 8.

The sealing block 200 of the sealing apparatus according to Embodiment 1 of the present disclosure is configured to seal the lead film 30 and the pouch 10. That is, the sealing block 200 may form the sealing portion 12 of the pouch-type secondary battery. The sealing block 200 may thermally join the inner layer of the pouch 10 and the lead film 30 by applying pressure and heat.

The sealing block 200 may include a pair of sealing blocks arranged facing each other in the direction of pressure applied. That is, the pair of sealing blocks 200 may face each other with the secondary battery interposed between them.

The sealing block 200 may be configured to apply pressure and heat to the pouch 10 while in contact with the pouch 10.

The sealing block 200 may be configured to seal a central portion of the lead film 30 that overlaps the lead metal 20. In particular, the sealing block 200 may include the first sealing surface 210 configured to seal the central portion of the lead film 30 that overlaps the lead metal 20. The first sealing surface 210 may seal the central portion of the lead film 30 and the pouch 10 by applying pressure and heat.

The sealing block 200 may further include the second sealing surface 220 to seal two end portions of the lead film 30 and the pouch 10. The second sealing surface 220 may be stepped with respect to the first sealing surface 210.

The second sealing surface 220 may be configured to seal the two end portions of the lead film 30. Here, the end portion of the lead film 30 may be a portion that does not overlap the lead metal 20. The second sealing surface 220 may be disposed at a more outer position than the two end portions of the first sealing surface 210. The second sealing surface 220 may be stepped such that it protrudes further than the first sealing surface 210 in the direction in which the sealing block 200 applies pressure. An inclined portion 250 may be formed between the second sealing surface 220 and the first sealing surface 210 by the step. The inclined portion 250 may connect the first sealing surface 210 to the second sealing surface 220.

The sealing block 200 may further include the third sealing surface 240 to seal each inner layer of the pouch 10. The third sealing surface 240 may be stepped with respect to the second sealing surface 220.

The third sealing surface 240 may be disposed outside of the second sealing surface 220, and seal the pouch 10 on the sides by applying pressure and heat to the pouch 10. The third sealing surface 240 may be stepped such that it protrudes further than the second sealing surface 220 in the direction in which the sealing block 200 applies pressure. Accordingly, the third sealing surface 240, the second sealing surface 220 and the first sealing surface 210 may be stepped in a sequential order.

The first sealing surface 210 includes a center sealing surface 211 and a side sealing surface 212.

The center sealing surface 211 may be an area including the central portion of the first sealing surface 210, and the side sealing surface 212 may be an area including two end portions of the first sealing surface 210.

The side sealing surface 212 is stepped with the center sealing surface 211. More specifically, in the direction in which the sealing block 200 applies pressure, the side sealing surface 212 may be stepped such that it protrudes further than the center sealing surface 211.

The side sealing surface 212 may be extended from the end portion of the center sealing surface 211, and be stepped with the center sealing surface 211.

The side sealing surface 212 may be formed between the center sealing surface 211 and the second sealing surface 220. The side sealing surface 212 may be also stepped with the second sealing surface 220. In other words, the side sealing surface 212 may be stepped with both the center sealing surface 211 and the second sealing surface 220. That is, the center sealing surface 211, the side sealing surface 212 and the second sealing surface 220 may be stepped in a sequential order in the direction of pressure applied.

By employing the side sealing surface 212, it may be possible to reduce the size of the void S and improve the sealing quality by allowing the lead film 30 to flow in the length direction X during sealing.

Meanwhile, the sealing block 200 includes a sealing protrusion 230. The sealing protrusion 230 protrudes in the height direction Z to a predetermined distance from the side sealing surface 212. The sealing protrusion 230 may guide the molten lead film 30 to flow in the length direction X of the lead film 30. Additionally, the sealing protrusion 230 may prevent the molten lead film 30 from flowing in the width direction Y of the lead film 30. The sealing protrusion 230 may protrude from the first sealing surface 210 in the direction in which the sealing block 200 applies pressure. The sealing protrusion 230 may protrude to a predetermined thickness in a direction in which the sealing block applies pressure, in order to prevent the lead film from flowing in a width direction Y of the first sealing surface 210. The length direction X may correspond to the longitudinal direction of the sealing protrusion 230.

Specifically, the sealing protrusion 230 may be disposed in the side sealing surface 212. The sealing protrusion 230 may protrude from the side sealing surface 212. The sealing protrusion 230 may be extended in the length direction X of the side sealing surface 212. In other words, the sealing protrusion 230 may be formed in the shape of a rectangular bar.

The sealing protrusion 230 may include a plurality of sealing protrusions. For example, the sealing protrusion 230 may include a pair of sealing protrusions. In this case, the sealing protrusion 230 may include a first sealing protrusion 231, and a second sealing protrusion 232 spaced a predetermined distance apart from the first sealing protrusion 231 in the width direction Y of the side sealing surface 212. The first sealing protrusion 231 and the second sealing protrusion 232 may be parallel to each other in the width direction Y of the side sealing surface 212. The width direction Y of the side sealing surface corresponds to the width direction Y.

The first sealing protrusion 231 and the second sealing protrusion 232 may be located at two edges of the side sealing surface 212 in the width direction Y, respectively. The first sealing protrusion 231 may be located at the inner edge of the side sealing surface 212, and the second sealing protrusion 232 may be located at the outer edge of the side sealing surface 212.

The first sealing protrusion 231 and the second sealing protrusion 232 may be formed with the same width and length. The first sealing protrusion 231 and the second sealing protrusion 232 may protrude from the side sealing surface 212 to the same height.

The sealing protrusion 230 may be extended in the length direction X of the side sealing surface 212. More specifically, the sealing protrusion 230 may be extended between the center sealing surface 211 and the inclined portion 250.

By employing the sealing protrusion 230, it may be possible to prevent leakage of the molten lead film 30 in the width direction Y of the lead film 30 during sealing of the lead film 30 and the pouch 10 by the sealing block 200. The width direction Y of the lead film 30 may be parallel to the length direction X of the lead metal 20, i.e., the inward-outward direction of the pouch 10. Additionally, the width direction Y of the lead film 30 may be parallel to the width direction Y of the side sealing surface 212.

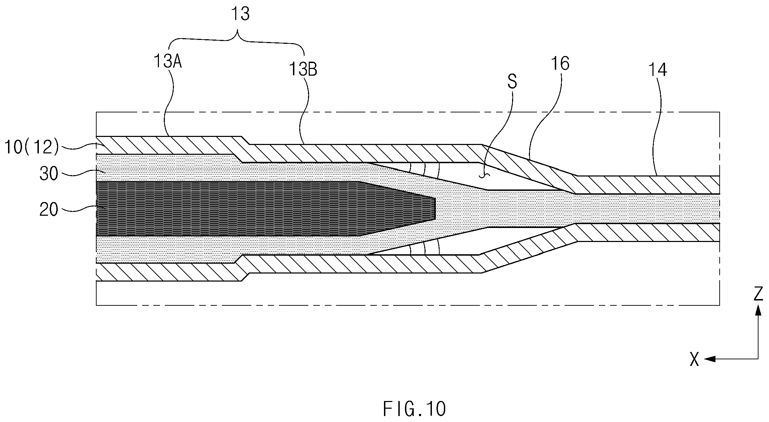

FIG. 10 is a cross-sectional view of FIG. 1, taken along the line I-I', showing the secondary battery manufactured by the sealing apparatus according to Embodiment 1 of the present disclosure.

The secondary battery manufactured by the sealing apparatus according to the present disclosure also corresponds to the scope of the present disclosure.

Referring to FIGS. 9 and 10, the first sealing surface 210 of the sealing apparatus may seal the central portion of the lead film 30 that overlaps the lead metal 20 and the pouch 10. Accordingly, the sealing portion 12 of the pouch 10 includes a first area 13 where the pouch 10 and the lead film 30 are sealed, and the first area 13 overlaps the lead metal 20. The first area 13 may be formed by the application of pressure from the first sealing surface 210.

The second sealing surface 220 of the sealing apparatus may seal the two end portions of the lead film 30 that do not overlap the lead metal 20 and the pouch 10. Accordingly, the sealing portion 12 of the pouch 10 may include a second area 14 where the two end portions of the lead film 30 and the pouch 10 are sealed. The second area 14 may be formed by the application of pressure from the second sealing surface 220. Because the first sealing surface 210 and the second sealing surface 220 of the sealing apparatus are stepped with each other, the first area 13 and the second area 14 of the pouch 10 may be stepped with each other.

The first sealing surface 210 of the sealing apparatus includes the center sealing surface 211 and the side sealing surface 212. The side sealing surface 212 is stepped such that it protrudes further from the center sealing surface 211 in the direction in which the sealing block 200 applies pressure. The center sealing surface 211, the side sealing surface 212 and the second sealing surface 220 may be stepped in a sequential order in the direction in which the sealing block 200 applies pressure. The side sealing surface 212 may overlap the edge area of the lead metal 20 in the width direction Y. The void S may be formed between the lead film 30 and the pouch 20. The void S may be located at a corresponding area to the inclined portion 250. That is, the inclined portion 250 may face the void S.

Because the side sealing surface 212 is stepped such that it protrudes further from the center sealing surface 211 in the direction of pressure applied, a larger pressure may be applied to the lead film 30 of the overlapping area with the side sealing surface 212. More specifically, a larger pressure may be applied to the lead film 30 of the overlapping area with the side sealing surface 212 in the direction of pressure applied than the lead film 30 of the overlapping area with the center sealing surface 211. The flow of the molten lead film 30 in the length direction X of the side sealing surface 212 may be promoted. That is, due to the side sealing surface 212, the molten lead film 30 may flow in the length direction X of the side sealing surface 212 and into the void S. Accordingly, the volume of the void S may be reduced.

Because the first sealing surface 210 includes the center sealing surface 211 and the side sealing surface 212, the first area 13 of the sealing portion 12 of the pouch 10 includes a center area 13A and a side area 13B. The center area 13A may be formed by the application of pressure from the center sealing surface 211, and the side area 13B may be formed by the application of pressure from the side sealing surface 212.

The center area 13A may overlap the central portion of the lead metal 20, and the side area 13B may overlap two edges of the lead metal 20 in the width direction Y. The side area 13B is located at two sides of the center area 13A. The side area 13B is stepped with respect to the center area 13A in the height direction Z. More specifically, the side area 13B may be stepped toward the lead film 30 with respect to the center area 13A. That is, because the side area 13B is subjected to larger pressure than the center area 13A, the molten lead film 30 may be more likely to flow into the void S, and the volume of the void S may be reduced.

Additionally, the second area 14 may be stepped with respect to the side area 13B. More specifically, the second area 14 may be stepped toward the lead film 30 with respect to the side area 13B. That is, in the thickness direction of the sealing portion 12, the center area 13A, the side area 13B and the second area 14 may be stepped in a sequential order. The thickness direction of the sealing portion 12 corresponds to the height direction Z.

The sealing portion 12 of the pouch 10 may further include an inclined area 16 between the side area 13B and the second area 14. The inclined area 16 may be formed by the application of pressure from the inclined portion 250 of the sealing block 200. The inclined area 16 may be extended at an angle between an end portion of the side area 13B and an end portion of the second area 14.

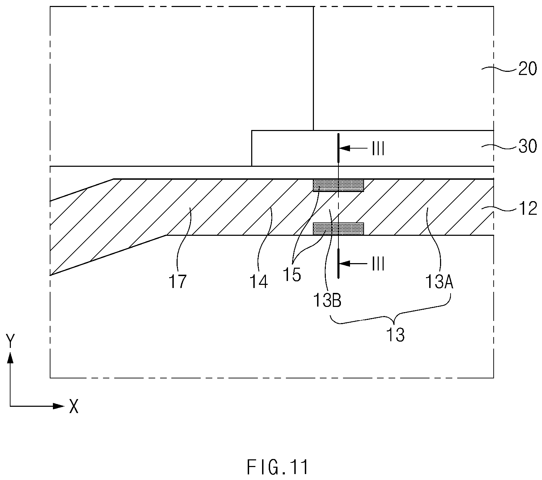

The sealing portion 12 of the pouch 10 may further include a third area 17 (see FIG. 11) where each inner layer of the pouch 10 is sealed. The third area 17 may be formed by the application of pressure from the third sealing surface 240. Because the second sealing surface 220 and the third sealing surface 240 of the sealing apparatus are stepped with each other, the second area 14 and the third area 17 of the pouch 10 may be stepped with each other. More specifically, the third area 17 may be stepped toward the inner layer of the pouch 10 with respect to the second area 14.

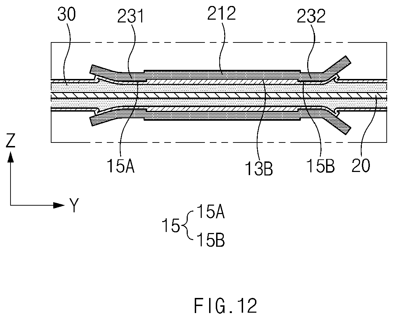

FIG. 11 is an enlarged plan view of the sealing portion of the pouch formed by the sealing apparatus according to Embodiment 1 of the present disclosure and the lead film adjacent thereto, and FIG. 12 is a cross-sectional view of FIG. 11, taken along the line III-III'.

Referring to FIGS. 9, 11 and 12, the sealing protrusion 230 may be disposed in the side sealing surface 212. The pair of sealing protrusions 230 may be arranged at a predetermined interval in the width direction Y of the side sealing surface 212. The first sealing protrusion 231 may be formed at the inner edge of the side sealing surface 212, and the second sealing protrusion 232 may be formed at the outer edge of the side sealing surface 212.

When the sealing block 200 applies pressure to the pouch 10, a larger pressure may be applied to the lead film 30 at a corresponding location to the sealing protrusion 230 than the area at which the sealing protrusion 230 is not formed.

In other words, the pressure by the sealing protrusion 230 may be applied to a portion of the lead film 30 corresponding to the two edges of the side sealing surface 212 in the width direction Y, thereby preventing the molten lead film 30 from flowing in the width direction Y of the side sealing surface 212, i.e., the inward-outward direction of the pouch 10.

In this case, the lead film 30 subjected to pressure by the side sealing surface 212 may move to fill the void S between the pouch 10 and the lead film 30, rather than moving in the inward-outward direction of the pouch 10. That is, the flow of the lead film 30 in width direction Y of the side sealing surface 212 may be restricted by the sealing protrusion 230, and the lead film 30 may be allowed to flow in the length direction X of the side sealing surface 212 and fill the void S (see FIG. 10).

By the sealing protrusion 230 of the sealing apparatus, a pressed portion 15 is formed in the sealing portion 12 of the pouch 10. The pressed portion 15 is formed by the application of pressure from the sealing protrusion 230. The pressed portion 15 is formed in the side area 13B. The pressed portion extends in the length direction X of the side area 13B. The length direction X of the side area 13B corresponds to the length direction X. The pressed portion 15 may be formed at two edges of the side area 13B of the sealing portion 12 in the width direction Y.

The pressed portion 15 may include a pair of pressed portions arranged at a predetermined interval in the width direction Y of the side area 13B. The width direction Y of the side area 13B corresponds to the width direction Y. More specifically, the pressed portion 15 may include a first pressed portion 15A formed along the inner edge of the side area 13B, and a second pressed portion 15B formed along the outer edge of the side area 13B.

The length of the pressed portion 15 may correspond to the length of the side area 13B. That is, the length of the pressed portion 15 may be equal or similar to the length of the side area 13B.

Meanwhile, because the sealing block 200 applies pressure to two sides of the pouch 10 to form the sealing portion 12, two surfaces of the sealing portion 12 may have a symmetrical shape. That is, the first area 13 may be located on the two surfaces of the sealing portion 12. More specifically, the center area 13A, the side area 13B and the pressed portion 15 may be located on the two surfaces of the sealing portion 12. Likewise, the second area 14, the inclined area 16 and the third area 17 may be also located on the two surfaces of the sealing portion 12.

### Embodiment 2

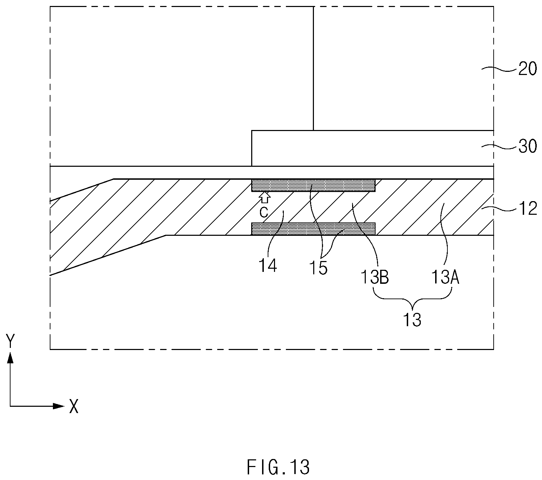

FIG. 13 is an enlarged plan view of the sealing portion of the pouch formed by the sealing apparatus according to Embodiment 2 of the present disclosure and the lead film adjacent thereto.

In Embodiment 2 of the present disclosure, the sealing protrusion 230 of the sealing apparatus is extended to the second sealing surface 220 over the side sealing surface 212. Except this difference, it is noted that the previous description of the secondary battery according to Embodiment 1 of the present disclosure may be equally applied to Embodiment 2, and accordingly the common description to Embodiment 1 is omitted, and Embodiment 2 will be described based on the difference from Embodiment 1.

Referring to FIG. 13, the sealing protrusion 230 may be extended to the second sealing surface 220. That is, the sealing protrusion 230 may be formed across the side sealing surface 212 and the second sealing surface 220. More specifically, the sealing protrusion 230 may be extended between the center sealing surface 211 and the third sealing surface 240.

In this case, it may be possible to prevent additional leakage (c) of the lead film 30 that may occur at the area of the lead film 30 that does not overlap the lead metal 20.

Additionally, in the case of the secondary battery manufactured by the sealing apparatus, the pressed portion 15 formed in the sealing portion 12 may be extended to the second area 14 over the side area 13B. The pressed portion 15 may be extended between the center area 13A and the third area 17.

Although the present disclosure has been hereinabove described with respect to a limited number of embodiments and drawings, the foregoing description is provided to describe the technical aspect of the present disclosure by way of example.

Accordingly, the disclosed embodiments are provided to describe the technical aspect of the present disclosure but not intended to be limiting, and the technical scope of the present disclosure is defined by the appended claims.

**[List of Reference Numerals]**

| | | | |
|---|---|---|---|
| 10: | Pouch | 11: | Accommodation portion |
| 12: | Sealing portion | 13: | First area |
| 13A: | Center area | 13B: | Side area |
| 14: | Second area | 15: | Pressed portion |
| 15A: | First pressed portion | 15B: | Second pressed portion |
| 16: | Inclined area | 17: | Third area |
| 20: | Lead metal | 30: | Lead film |
| 200: | Sealing block | 210: | First sealing surface |
| 211: | Center sealing surface | 212: | Side sealing surface |
| 220: | Second sealing surface | 230: | Sealing protrusion |
| 231: | First sealing protrusion | 232: | Second sealing protrusion |
| 240: | Third sealing surface | | |

Preferred examples of the Invention are specified in the following items:
Item 1. A sealing block (200) configured to seal a lead film (30) covering a lead metal (20) and a pouch (10) covering the lead film (30),
   wherein the sealing block (200) includes a first sealing surface (210) extending in a length direction (X) and is configured to apply pressure in a height direction (Z) perpendicular to the length direction (X),
   wherein the first sealing surface (210) includes:
      a center sealing surface (211) extending in the length direction (X); and
      a side sealing surface (212) located at each end of the center sealing surface (211) in the length direction (X),
      wherein the side sealing surface (212) is stepped in the height direction (Z) with respect to the center sealing surface (211), and
      wherein the side sealing surface (212) has a sealing protrusion (230) that protrudes in the height direction (Z) to a predetermined distance from the side sealing surface (212)..
Item 2. The sealing block according to Item 1, further comprising:
   a second sealing surface (220) stepped in the height direction (Z) with respect to the first sealing surface (210).
Item 3. The sealing block according to Item 2,
   wherein the center sealing surface (211), the side sealing surface (212) and the second sealing surface (220) are stepped in a sequential order in the height direction (Z).
Item 4. The sealing block according to any one of Items 2-3, further comprising:
   an inclined portion (250) extending at an angle between an end portion of the side sealing surface (212) and an end portion of the second sealing surface (220).
Item 5. The sealing block according to any one of Items 1-4,
   wherein the sealing protrusion (230) is extending along the length direction (X).
Item 6. The sealing block according to any one of Items 1-5,
   wherein the sealing protrusion (230) includes a plurality of sealing protrusions (231, 232) arranged at a predetermined interval in a width direction (Y) perpendicular to the length direction (X) and perpendicular to the height direction (Z).
Item 7. The sealing block according to any one of Items 1-6,
   wherein the sealing protrusion (230) is formed at edge of the side sealing surface (212) in the width direction (Y).
Item 8. The sealing block according to Item 6,
   wherein the plurality of sealing protrusions (231, 232) include:
   a first sealing protrusion (231) formed at an edge of the side sealing surface (212) in the width direction (Y); and
   a second sealing protrusion (232) formed at an opposite edge of the side sealing surface (212) in the width direction (Y).
Item 9. The sealing block according to any one of Items 2-8,
   wherein the sealing protrusion (230) is extending to the second sealing surface (220) over the entire length of the side sealing surface (212).
Item 10. The sealing block according to any one of Items 1-9,
   wherein the sealing block (200) includes a pair of sealing blocks arranged facing each other in the height direction (Z).
Item 11. A sealing apparatus comprising the sealing block according to any one of Items 1-10.
Item 12. A secondary battery comprising:
   a pouch (10) including an accommodation portion (11) accommodating an electrode assembly, and a sealing portion (12) disposed around the accommodation portion (11);
   a lead metal (20) connected to the electrode assembly and protruded outward over the sealing portion (12); and
   a lead film (30) covering the lead metal (20) and sealed with the sealing portion (12),
   wherein the sealing portion (12) includes a first area (13) where the pouch (10) and the lead film (30) are sealed, the first area (13) overlapping the lead metal (20),
   wherein the first area (13) includes:
      a center area (13A); and
      a side area (13B) located at two sides of the center area (13A) and stepped with the center area (13A) in a height direction (Z), and
      wherein the side area (13B) has a pressed portion (15) extending in a length direction (X) perpendicular to the height direction (Z).
Item 13. The secondary battery according to Item 12,
   wherein the pressed portion (15) includes a pair of pressed portions extended parallel to each other and arranged at a predetermined interval in a width direction (Y), the width direction being perpendicular to the length direction (X) and perpendicular to the height direction (Z).
Item 14. The secondary battery according to any one of Items 12-13,
   wherein the pressed portion (15) is formed at two edges of the side area (13B) in a width direction (Y).
Item 15. The secondary battery according to any one of Items 12-14,
   wherein the sealing portion (12) further includes:
   a second area (14) where two end portions of the lead film (30) and the pouch (10) are sealed, the second area (14) being stepped with the first area (13) in the height direction (Z).
Item 16. The secondary battery according to Item 15,
   wherein the center area (13A), the side area (13B) and the second area (14) are stepped in a sequential order in the height direction (Z).
Item 17. The secondary battery according to Item 15 or 16,
   wherein the sealing portion (12) further includes:
   an inclined area (16) formed between the side area (13B) and the second area (14), and extending at an angle between an end portion of the side sealing surface (212) and an end portion of the second sealing surface (220).
Item 18. The secondary battery according to any one of Items 15-17,
   wherein the pressed portion (15) is extending to the second area (14) over the side area (13B).
Item 19. The secondary battery according to any one of Items 12-18,
   wherein the center area (13A), the side area (13B) and the pressed portion (15) are located at two surfaces of the sealing portion (12).

## Claims

1. A sealing block (200) configured to seal a lead film (30) covering a lead metal (20) and a pouch (10) covering the lead film (30),
wherein the sealing block (200) includes a first sealing surface (210) extending in a length direction (X) and is configured to apply pressure in a height direction (Z) perpendicular to the length direction (X),
wherein the first sealing surface (210) includes:
a center sealing surface (211) extending in the length direction (X); and
a side sealing surface (212) located at each end of the center sealing surface (211) in the length direction (X),
wherein the side sealing surface (212) is stepped in the height direction (Z) with respect to the center sealing surface (211) such that the side sealing surface (212) is stepped in the direction in which the sealing block (200) is configured to apply pressure and such that the side sealing surface protrudes further than the center sealing surface (211), and
wherein the side sealing surface (212) has a sealing protrusion (230) that protrudes in the height direction (Z) to a predetermined distance from the side sealing surface (212) and is adapted for guiding the molten lead film (30) to flow in the length direction X of the lead film (30),
**characterized in that** the sealing protrusion (230) is formed at edge of the side sealing surface (212) in the width direction (Y).

2. The sealing block according to claim 1, further comprising:
a second sealing surface (220) stepped in the height direction (Z) with respect to the first sealing surface (210).

3. The sealing block according to claim 2,
wherein the center sealing surface (211), the side sealing surface (212) and the second sealing surface (220) are stepped in a sequential order in the height direction (Z).

4. The sealing block according to any one of claims 2-3, further comprising:
an inclined portion (250) extending at an angle between an end portion of the side sealing surface (212) and an end portion of the second sealing surface (220).

5. The sealing block according to any one of claims 1-4,
wherein the sealing protrusion (230) is extending along the length direction (X).

6. The sealing block according to any one of claims 1-5,
wherein the sealing protrusion (230) includes a plurality of sealing protrusions (231, 232) arranged at a predetermined interval in a width direction (Y) perpendicular to the length direction (X) and perpendicular to the height direction (Z),
preferably wherein the plurality of sealing protrusions (231, 232) include:
a first sealing protrusion (231) formed at an edge of the side sealing surface (212) in the width direction (Y); and
a second sealing protrusion (232) formed at an opposite edge of the side sealing surface (212) in the width direction (Y).

7. The sealing block according to any one of claims 2-6,
wherein the sealing protrusion (230) is extending to the second sealing surface (220) over the entire length of the side sealing surface (212).

8. The sealing block according to any one of claims 1-7,
wherein the sealing block (200) includes a pair of sealing blocks arranged facing each other in the height direction (Z).

9. A sealing apparatus comprising the sealing block according to any one of claims 1-8.

10. A secondary battery comprising:
a pouch (10) including an accommodation portion (11) accommodating an electrode assembly, and a sealing portion (12) disposed around the accommodation portion (11);
a lead metal (20) connected to the electrode assembly and protruded outward over the sealing portion (12); and
a lead film (30) covering the lead metal (20) and sealed with the sealing portion (12),
wherein the sealing portion (12) includes a first area (13) where the pouch (10) and the lead film (30) are sealed, the first area (13) overlapping the lead metal (20),
wherein the first area (13) includes:
a center area (13A); and
a side area (13B) located at two sides of the center area (13A) and stepped with the center area (13A) in a height direction (Z),
wherein the side area (13B) is stepped toward the lead film (30) with respect to the center area (13A), and
wherein the side area (13B) has a pressed portion (15) extending in a length direction (X) perpendicular to the height direction (Z),
**characterized in that** the pressed portion (15) is formed at two edges of the side area (13B) in a width direction (Y).

11. The secondary battery according to claim 10,
wherein the pressed portion (15) includes a pair of pressed portions extended parallel to each other and arranged at a predetermined interval in a width direction (Y), the width direction being perpendicular to the length direction (X) and perpendicular to the height direction (Z).

12. The secondary battery according to any one of claims 10 to 11,
wherein the sealing portion (12) further includes:
a second area (14) where two end portions of the lead film (30) and the pouch (10) are sealed, the second area (14) being stepped with the first area (13) in the height direction (Z),
preferably wherein the center area (13A), the side area (13B) and the second area (14) are stepped in a sequential order in the height direction (Z).

13. The secondary battery according to claim 12,
wherein the sealing portion (12) further includes:
an inclined area (16) formed between the side area (13B) and the second area (14), and extending at an angle between an end portion of the side sealing surface (212) and an end portion of the second sealing surface (220).

14. The secondary battery according to any one of claims 12 to 13,
wherein the pressed portion (15) is extending to the second area (14) over the side area (13B).

15. The secondary battery according to any one of claims 10 to 14,
wherein the center area (13A), the side area (13B) and the pressed portion (15) are located at two surfaces of the sealing portion (12).
